# EUROPEAN PATENT APPLICATION

(11) **EP 2 495 641 A2**
(43) Date of publication of application: **05.09.2012**
(21) Application number: 11178901.2
(22) Date of filing: 25.08.2011
(51) Int. Cl.: G06F 3/041

(54) **Touch sensitive device and fabrication method thereof**

(30) Priority: 03.03.2011 CN 201110051359
(71) Applicant: TPK Touch Solutions Inc., Neihu Taipei City 114 (TW)
(72) Inventor: Chen, Yu, Liu, 320 Jhongli City (CN)
(74) Representative: Berkkam, Ayfer

(57) **Abstract**

The present invention relates to a touch sensitive device comprising a substrate, a mask layer, at least one touch sensing assembly partially masked by the mask layer, and an insulator formed between the mask layer and the touch sensing assembly for insulating the mask layer and the touch sensing assembly; wherein the mask layer, the touch sensing assembly, and the insulator are integrally formed on the substrate.

## Description

### BACKGROUND OF THE INVENTION

### FIELD OF THE INVENTION

The present invention relates to an input device, and more particularly to a touch sensitive device and fabrication method thereof.

### DESCRIPTION OF THE RELATED ART

Nowadays, touch-sensing technology has been widely used for the input of electronic devices, such as display monitors, cell phones, and game machines. In this manner, pressing on a touch sensitive device with fingers or a stylus allows information access or transmission, which uses no button, keyboard, or joystick as an input interface of a conventional electronic device.

The touch sensitive device may include a display panel and a touch-sensing panel laminated on the display panel. In other words, in order to provide the display panel with a touch sensing function, the touch-sensing panel must be attached by adhering to the surface of the display panel; and the touch-sensing panel includes a cover glass for protection and a sensing substrate covered with the cover glass for support. However, such a structure involves many layers, which makes it complicated to fulfill the requirement that electronic devices are expected to be thin and light.

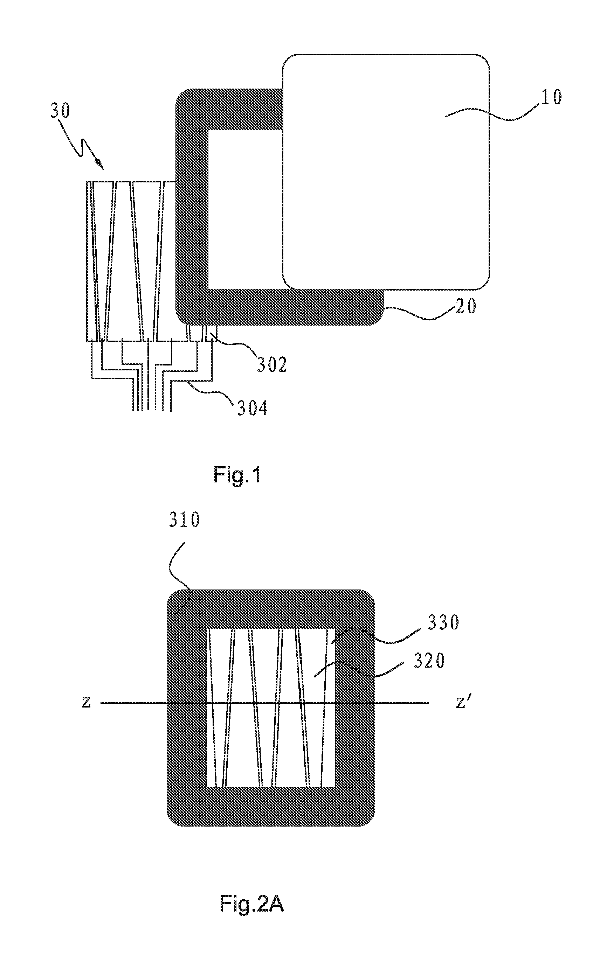

Recently, a slim-type touch-sensing panel has been provided, which only uses one cover glass to play both roles of protection and support, like a cover glass 10 shown in Fig.1. Moreover, in Fig.1, the slim-type touch-sensing panel also comprises a black ink layer 20 coated on a border region of the cover glass 10, and a sensing assembly 30 formed under the black ink layer 20. The touch sensing assembly 30 includes at least one sensing electrode 302 for sensing the outside touch, and at least one wire trace 304 for transmitting the sensing signals to a processor (not shown) for further calculating the touch position. In order to prettify the appearance of the slim-type touch-sensing panel, the border region of the cover glass 10 corresponds to the area where the wire trace 304 is placed. The black ink layer 20 can prevent users from noticing the wire trace 304, which creates a better visual effect.

Though the thickness of the slim-type touch-sensing panel is reduced because a sensing substrate is omitted, there is still an existing problem. If the black ink layer 20 has poor insulation, it may lead to an electrical connection being produced between the sensing electrode 302 and the black ink layer 20. This electrical connection between the black ink layer 20 and the sensing electrode 302 could then short the sensing electrodes 302 and hence generate inaccurate sensing signals.

Therefore, it is desired to provide a slim-type touch sensitive device that solves the above drawbacks of the conventional slim-type touch-sensing panel.

### SUMMARY OF THE INVENTION

Accordingly, the present invention provides a touch sensitive device having at least one insulator between a mask layer and a touch sensing assembly to achieve a higher sensing ability.

In one aspect, a sensitive device is provided including a substrate, a mask layer, at least one touch sensing assembly that is partially masked by the mask layer, and an insulator formed between the mask layer and the touch sensing assembly for insulating the mask layer and the touch sensing assembly. Wherein the mask layer, the touch sensing assembly and the insulator are integrally formed on the substrate.

In another aspect, a touch sensitive device is provided including a substrate with a mask layer placed thereon, a touch sensing assembly, and an insulator formed between the mask layer and the touch sensing assembly.

In another aspect, a touch sensitive device is provided including a first touch sensing assembly, a second touch sensing assembly formed on a different level with the first touch sensing assembly, a substrate with the first touch sensing assembly placed thereon, a mask layer, a first insulator formed between the first touch sensing assembly and the mask layer, and a second insulator formed between the second touch sensing assembly and the mask layer.

In another aspect, a touch sensitive device is provided including a substrate with a mask layer placed thereon, a first touch sensing assembly, a second touch sensing assembly formed on the different level with the first touch sensing assembly, a first insulator formed between the first touch sensing assembly and the mask layer, and a second insulator formed between the first touch sensing assembly and the second touch sensing assembly.

In another aspect, a fabrication method for a touch sensitive device is provided including the steps of forming an insulator between a mask layer and a touch sensing assembly for insulating the mask layer and the touch sensing assembly.

### BRIEF DESCRIPTION OF THE DRAWINGS

Fig.1 is a schematic diagram of an enlarged view of a conventional slim-type touch sensing panel;

Fig.2A is a schematic diagram of a top view of a touch sensitive device according to a first embodiment of the present invention;

Fig.2B is a schematic diagram of a cross-sectional view taken along a sectional line Z-Z' in Fig. 2A according to the first embodiment of the present invention;

Figs.3A to 3B are schematic diagrams of enlarged views of a touch sensitive device according to a second embodiment of the present invention;

Figs.4A to 4C are schematic diagrams of enlarged views of a touch sensitive device according to a third embodiment of the present invention; and

Figs.5A∼5B are schematic diagrams of enlarged views of a touch sensitive device according to a fourth embodiment of the present invention.

### DETAILED DESCRIPTION

The detailed description of the present invention will be discussed in the following embodiments, which are not intended to limit the scope of the present invention, but still can be adapted for other applications. While the drawings are illustrated in detail, it is appreciated that the quantity of the disclosed components would be greater or less than that is disclosed, except the components expressly restricting amount.

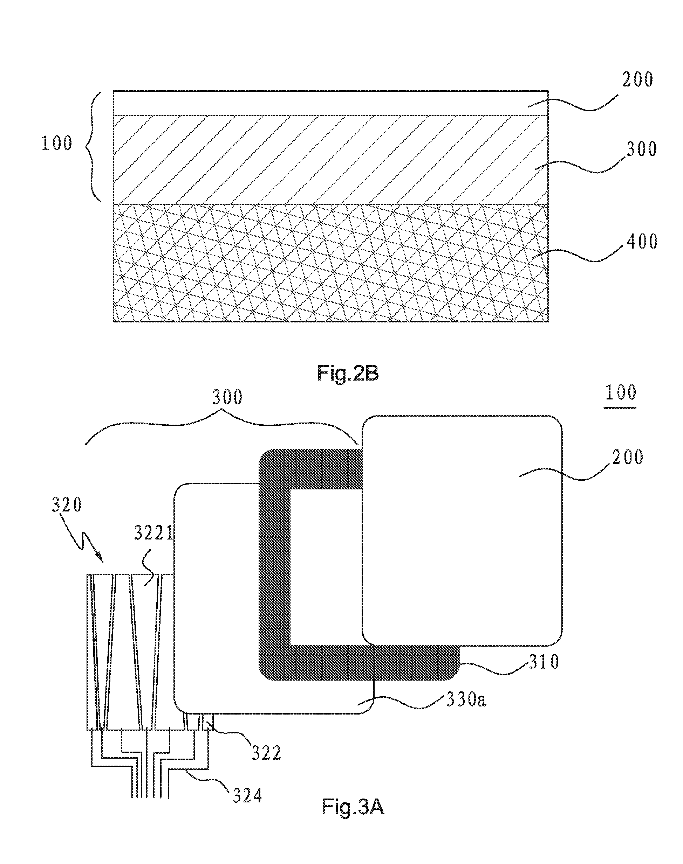

Fig.2A is a schematic diagram of a top view of a touch sensitive device according to a first embodiment of the present invention; while Fig.2B is a schematic diagram of a cross-sectional view taken along a sectional line Z-Z' in Fig. 2A. According to the first embodiment, shown in Fig.2A and Fig.2B, the touch sensitive device 100 includes a substrate 200 and an integrating assembly 300. For the design, the substrate 200 plays both roles of acting as a cover and a supporter for the integrating assembly 300. The integrating assembly 300 generally comprises a mask layer 310, at least one touch sensing assembly 320, and an insulator 330 formed between the mask layer 310 and the touch sensing assembly 320; wherein the mask layer 310 may partially cover or mask the touch sensing assembly 320, formed on the peripheral area of the substrate 200. The integrating assembly 300 is formed on one side of the substrate 200, which means the mask layer 310, the touch sensing assembly 320, and the insulator 330 may be integrally formed on the substrate 200, are especially formed on the same side of the substrate 200. Moreover, as shown in Fig. 2B, the touch sensitive device 100 may be capable of being disposed above a display device 400, such as LCD, CRT, OLED, or other types of display devices.

Due to the fact the substrate 200 may be one kind of transparent material such as glass or plasticization material, and the integrating assembly 300 is made to be substantially transparent, except the area where the mask layer 310 is formed, the viewer could see what the display device 400 shows from the other side (i,e. opposing to the integrating assembly 300) of the substrate 200. Furthermore, due to the formation of the touch sensing assembly 320, at least one touch sensing signal is generated from at least one physical tactile input, such as a user's finger or stylus. It would cause variation of the touch sensing signal when the physical tactile comes closer to, or in contact with, the other side of the substrate 200, wherein the touch sensing signal could be capacitance, voltage or current. After that, a touch-sensing signal is transmitted to a processor (not shown) to further calculate the touch position.

The first embodiment shown in Fig. 2A and Fig. 2B only for general illustrations, the detailed introduction for the touch sensitive device 100 will be given as below.

Fig.3A is a schematic diagram of an enlarged view of a touch sensitive device according to a first exemplary of a second embodiment of the present invention. The touch sensitive device 100 shown in Fig.3A comprises a substrate 200 with a mask layer 310 placed thereon, a touch sensing assembly 320, and an insulator 330a, formed between the mask layer 310 and the touch-sensing assembly 320.

The touch sensing assembly 320 has a sensing electrode layer 322 and at least one conductive line 324, wherein the sensing electrode layer 322 comprises a plurality of sensing electrodes 3221 that are spaced apart from each other. Each of the sensing electrodes 3221 is coupled to the conductive line 324 to transmit a first-axis signal (e.g. a X-axis signal) and a second-axis signal (e.g. a Y-axis signal). The mask layer 310 is formed on the peripheral area of the substrate 200 to mask the conductive line 324. The insulator 330a is fully formed between the mask layer 310 and the touch sensing assembly 320 to prevent an electrical connection from being produced, as well as to avoid a short connection between the sensing electrodes 3221 when the mask layer 310 has a poor insulation property.

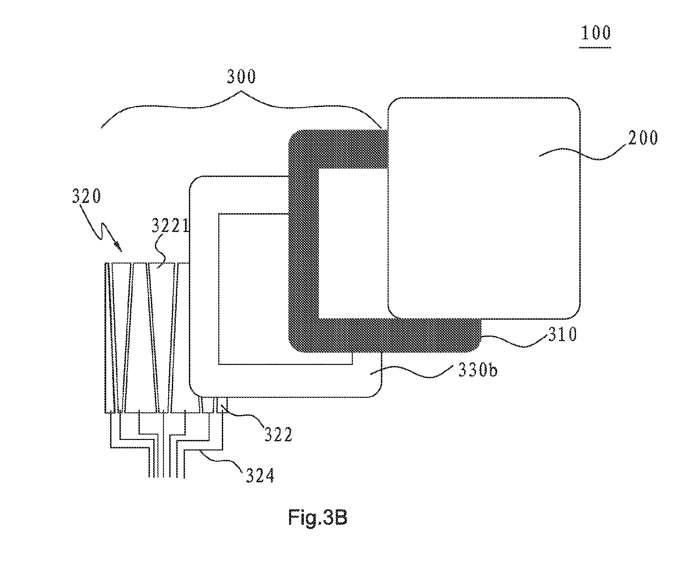

Fig.3B is a schematic diagram of an enlarged view of a touch sensitive device according to a second exemplary of the second embodiment of the present invention. The structure shown in Fig.3B is similar to that shown in Fig.3A. The insulator 330b shown in Fig.3B is partially formed between the mask layer 310 and the touch sensing assembly 320, and has a size similar to, the same with, or slightly larger than the mask layer 310 and also has a shape similar to, or the same with the mask layer 310.

In the other embodiment, the touch sensing assembly 320 may not be limited to the sensing electrode layer 322 with a single-layer-single-axis structure and could adopt other types of touch structures, such as single-layer-two-axis structure (i.e. two raw of spacing sensing electrodes are intercrossed and formed on the same layer) or two-layer-two-axis structure (i.e. two raw of spacing sensing electrodes are perpendicularly formed on different layers). No matter in the single-layer-two-axis structure or the two-layer-two-axis structure, the two raw of spacing sensing electrodes represent the X-axis and Y-axis respectively and also transmit X-axis signals and Y-axis signals, respectively.

Additionally, the conductive line 324 may have wire traces made by metal material or other kinds of material to be used but not limited in all exemplary of the second embodiment.

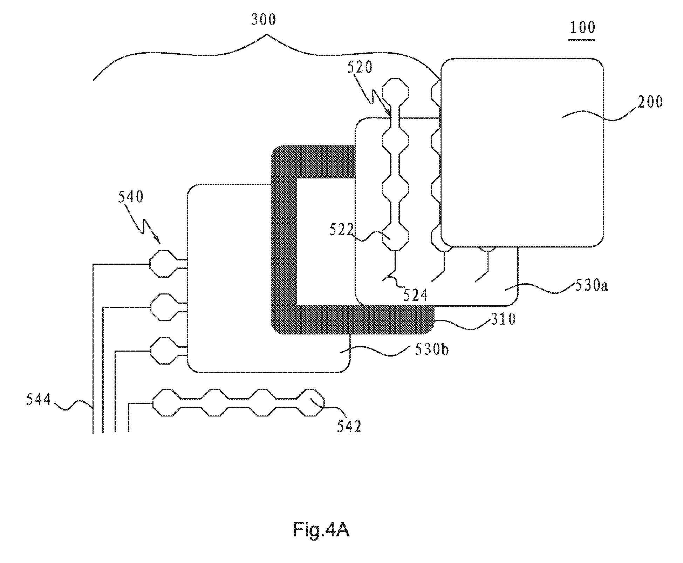

Figs.4A to 4C are schematic diagrams of enlarged views of a touch sensitive device according to a third embodiment of the present invention. The touch sensitive device 100 comprises a first touch sensing assembly 520, a second touch sensing assembly 540, a substrate 200 with the first touch sensing assembly 520 placed thereon, a mask layer 310, a first insulator 530a, and a second insulator 530b,

In the third embodiment, the first touch sensing assembly 520 has a first sensing electrode layer 522 and at least one first conductive line 524, and the second touch sensing assembly 540 has a second sensing electrode layer 542 and at least one second conductive line 544. The first sensing electrode layer 522 and the sensing electrode layer 542 belong to different layers in position and represent the X-axis and Y-axis for transmitting X-axis signals and Y-axis signals, respectively. The first insulator 530a is formed between the first sensing assembly 520 and the mask layer 310, and the second insulator 530b is formed between the second sensing assembly 540 and the mask layer 310.

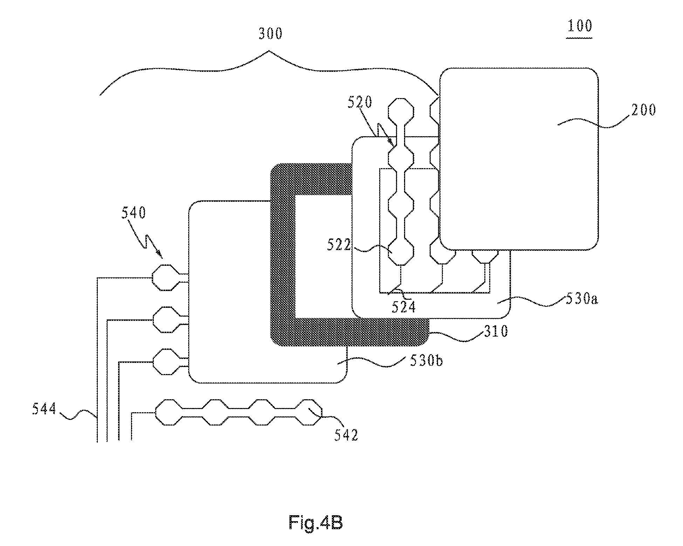

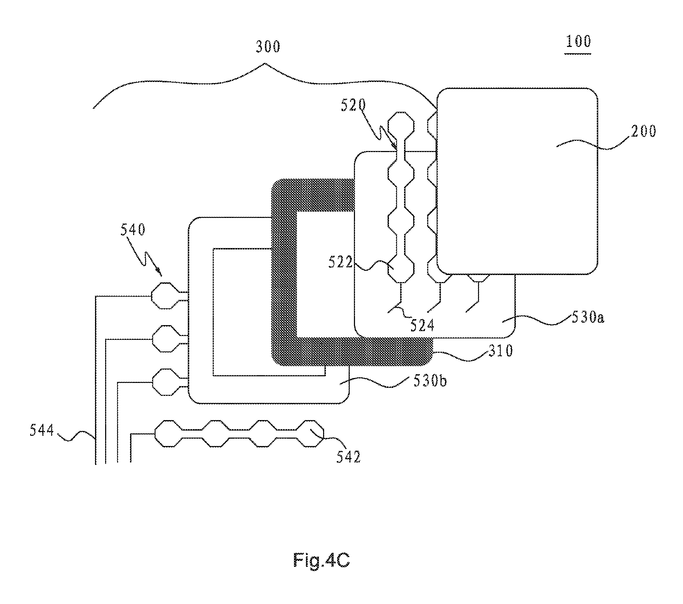

The differences between the constructions shown in Figs.4A-4CD, are the designing types of the first insulator 530a and the second insulator 530b. For example, as shown in Fig.4A, the first insulator 530a in the view area of the substrate 200 is fully formed between the first touch sensing assembly 520 and the mask layer 310. The second insulator 530b in the view area of the substrate 200 is fully formed between the second touch sensing assembly 540 and the mask layer 310. As shown in Fig.4B, the first insulator 530a is partially formed between the first touch sensing assembly 520 and the mask layer 310, and the second insulator 530b is still fully formed between the second touch sensing assembly 540 and the mask layer 310; wherein the size of the first insulator 530a is big enough to insulate the first touch sensing assembly 520 and the mask layer 310. As shown in Fig.4C, the first insulator 530a is fully formed between the first touch sensing assembly 520 and the mask layer 310, and the second insulator 530b is partially formed between the second touch sensing assembly 540 and the mask layer 310, wherein the size of the second insulator 530b is big enough to insulate the second touch sensing assembly 540 and the mask layer 310.

In the third embodiment, the first insulator 530a or the second insulator partially 530b formed in the partially-type has a size similar to, the same, or slightly larger than the mask layer 310 and also has a shape similar to, or the same with the mask layer 310.

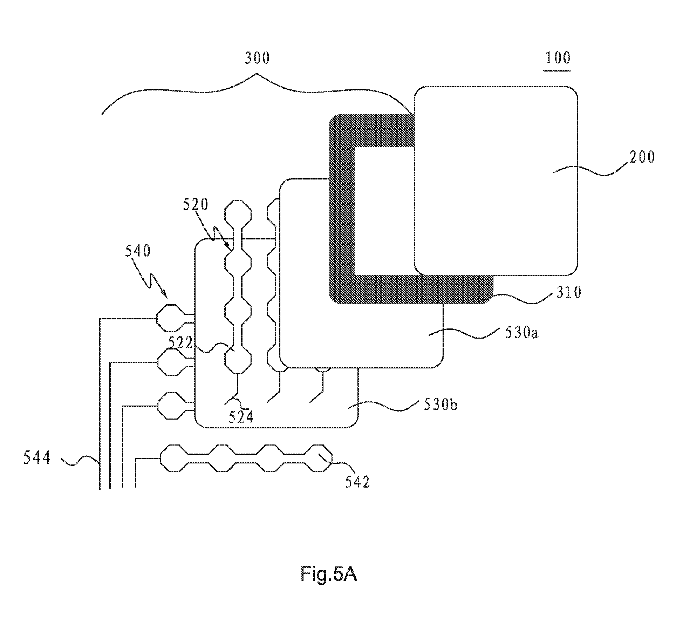

Figs.5A∼5B is a schematic diagram of an enlarged view of a touch sensitive device according to a fourth embodiment of the present invention. The elements utilized in the fourth embodiment are similar to the third embodiment, but the main difference is the corresponding positions of each element. The touch sensitive device 100 comprises a substrate 200 with a mask layer 310 placed thereon, a first touch sensing assembly 520 close to the substrate 200, a second touch sensing assembly 540 formed on a different level with the first touch sensing assembly 520 and is far away from the substrate 200, a first insulator 530a formed between the first touch sensing assembly 520 and the mask layer 310, and a second insulator 530b formed between the first touch sensing assembly 520 and the second touch sensing assembly 540.

Especially, the mask layer 310 in the fourth embodiment is formed on the peripheral area of the substrate 200 for masking both the first conductive line 524 and the second conductive line 544.

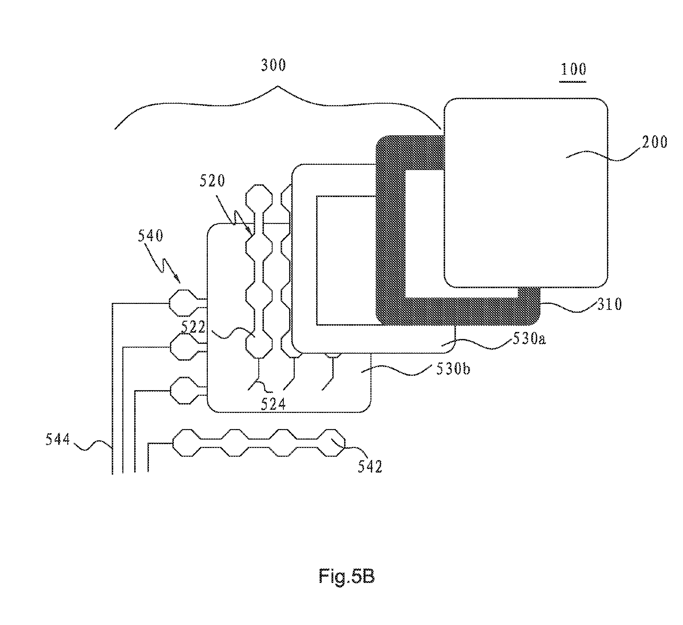

The differences between the constructions shown in Figs.4A to 4CD are the designing types of the first insulator 530a and the second insulator 530b. For example, as shown in The first insulator 530a in the view area of the substrate 200 is fully formed between the first touch sensing assembly 520 and the mask layer 310, and the second insulator 530b in the view area of the substrate 200 is fully formed between the first touch sensing assembly 520 and the second touch sensing assembly 540. As shown in Fig.5B, the first insulator 530a is partially formed between the first touch sensing assembly 520 and the mask layer 310; the second insulator 530b is fully formed between the first touch sensing assembly 520 and the second touch sensing assembly 540, wherein the size of the first insulator 530a is big enough to insulate the first touch sensing assembly 520 and the mask layer 310

The above-mentioned insulators, such as the insulator 330 shown in Fig.2A, the insulator 330a shown in Fig.3A, the insulator 330b shown in Fig.3B, the first insulator 530a shown in Figs.4A to 4C and Figs.5A to 5B, and the second insulator 530b shown in Figs.4A to 4C and Fig.5A to 5B, may be selected from the group consisting of organic material and inorganic material, wherein the organic material may be made of acrylic or the like and the inorganic material may be made of SiO2 or the like. Also, if the above-mentioned insulators are fully formed, then such insulators may be formed with complete planes. If the above-mentioned insulators are partially formed, then such insulators may be formed by a plane with a middle opening. Additionally, the above-mentioned mask layer 310 may be made of opaque ink material with various colors selected from the group consisting of black, white and blue.

Additionally, a fabrication method for a touch sensitive device is also provided, including steps of forming an insulator between a mask layer and a touch sensing assembly for insulating or isolating the mask layer and the touch sensing assembly, wherein the mask layer, the insulator, and the touch sensing assembly may be any type shown in the above embodiments.

Although the invention has been described in language specific to structural features and/or methodological acts, it is to be understood that the invention defined in the appended claims is not necessarily limited to the specific features or acts described. Rather, the specific features and acts are disclosed as example forms of implementing the claimed invention.

## Claims

1. A touch sensitive device, comprising:
a substrate with a mask layer placed thereon;
a touch sensing assembly; and
an insulator formed between the mask layer and the touch sensing assembly.

2. The touch sensitive device according to claim 1, wherein the touch sensing assembly has a sensing electrode layer and at least one conductive line.

3. The touch sensitive device according to claim 2, wherein the sensing electrode layer is consisted of single-layer-single-axis structure and comprises a plurality of sensing electrodes that are spaced apart from each other, wherein each of the sensing electrodes is coupled to the conductive line for transmitting a first-axis signal and a second-axis signal.

4. The touch sensitive device according to claim 2, wherein the sensing electrode layer is consisted of single-layer-two-axis structure or two-layer-two-axis structure.

5. The touch sensitive device according to claim 2, wherein the conductive line is a wire trace made by metal material.

6. The touch sensitive device according to claim 2, wherein the mask layer is formed on the peripheral area of the substrate for masking the conductive line.

7. The touch sensitive device according to claim 1, wherein the insulator is fully or partially formed between the mask layer and the touch sensing assembly.

8. The touch sensitive device according to claim 7, wherein the partially formed insulator has a size similar to, or slightly larger than, the mask layer and has a shape similar to the mask layer.

9. A touch sensitive device, comprising:
a first touch sensing assembly;
a second touch sensing assembly formed on the different level with the first touch sensing assembly;
a substrate with the first touch sensing assembly placed thereon;
a mask layer;
a first insulator formed between the first touch sensing assembly and the mask layer; and
a second insulator formed between the second touch sensing assembly and the mask layer.

10. The touch sensitive device according to claim 9, wherein the first touch sensing assembly has a first sensing electrode layer and at least one short conductive line, and the second touch sensing assembly has a second sensing electrode layer and at least one long conductive line.

11. The touch sensitive device according to claim 10, wherein the first sensing electrode layer and the sensing electrode layer belong to different layers in position and represent to X-axis and Y-axis for transmitting X-axis signals and Y-axis signals respectively.

12. The touch sensitive device according to claim 10, wherein the first conductive line and the second conductive line are wire traces made by metal material.

13. The touch sensitive device according to claim 9, wherein the first insulator is fully or partially formed between the first touch sensing assembly and the mask layer, and the second insulator is fully or partially formed between the second touch sensing assembly and the mask layer.

14. The touch sensitive device according to claim 13, wherein the first insulator or the second insulator partially formed has a size similar to or slightly larger than the mask layer and has a shape similar to the mask layer.

15. A touch sensitive device, comprising:
a substrate with a mask layer placed thereon;
a first touch sensing assembly;
a second touch sensing assembly formed on the different level with the first touch sensing assembly;
a first insulator formed between the first touch sensing assembly and the mask layer; and
a second insulator formed between the first touch sensing assembly and the second touch sensing assembly.

16. The touch sensitive device according to claim 15, wherein the first touch sensing assembly has a first sensing electrode layer and at least one first conductive line, and the second touch sensing assembly has a second sensing electrode layer and at least one second conductive line.

17. The touch sensitive device according to claim 16, wherein the first sensing electrode layer and the sensing electrode layer belong to different layers in position and represent to X-axis and Y-axis for transmitting X-axis signals and Y-axis signals respectively.

18. The touch sensitive device according to claim 16, wherein the first conductive line and the second conductive line are wire traces made by metal material.

19. The touch sensitive device according to claim 16, wherein the mask layer is formed on the peripheral area of the substrate for masking the first conductive line and the second conductive line.

20. The touch sensitive device according to claim 15, wherein the first insulator is fully or partially formed between the first touch sensing assembly and the mask layer, and the second insulator is fully formed between the first touch sensing assembly and the second touch sensing assembly.

21. The touch sensitive device according to claim 20, wherein the first insulator partially formed has a size similar to or slightly larger than the mask layer and has a shape similar to the mask layer.

22. A touch sensitive device, comprising:
a mask layer;
at least one touch sensing assembly partially masked by the mask layer; and
an insulator formed between the mask layer and the touch sensing assembly;
wherein the mask layer, the touch sensing assembly, and the insulator are integrally formed on a substrate to be an integrating assembly.

23. The touch sensitive device according to claim 22, wherein the touch sensitive device is capable of being disposed above a display device.

24. The touch sensitive device according to claim 22, wherein the substrate acts as a cover and a supporter for the integrating assembly.

25. The touch sensitive device according to claim 22, wherein the mask layer, the touch sensing assembly, and the insulator are integrally formed on the same side of the substrate, and at least one physical tactile input is received by the other side of the substrate.

26. The touch sensitive device according to claim 22, wherein the insulator is made of organic material.

27. The touch sensitive device according to claim 22, wherein the insulator is made of inorganic material.

28. The touch sensitive device according to claim 22, wherein the mask layer is made of opaque ink material with various colors selected from the group consisting of black, white and blue.

29. A touch sensitive device, comprising:
a mask layer;
a touch sensing assembly; and
means for insulating the mask layer and the touch sensing assembly.

30. The touch sensitive device according to claim 29, wherein the means for insulating the mask layer and the touch sensing assembly is an insulator formed between the mask layer and the touch sensing assembly.

31. The touch sensitive device according to claim 30, wherein the insulator is fully or partially formed between the mask layer and the touch sensing assembly.
